# EUROPÄISCHE PATENTSCHRIFT

(11) **EP 2 778 492 B1**
(45) Veröffentlichungstag und Bekanntmachung des Hinweises auf die Patenterteilung: **17.06.2015**
(21) Anmeldenummer: 13159375.8
(22) Anmeldetag: 15.03.2013
(51) Int. Cl.: F16L 23/00, F16L 23/10, F16B 2/10

(54) **Verbindung zweier Adapterteile einer modular aufbaubaren Tragvorrichtung**
Connection of two adapter sections of a modular support structure
Liaison de deux pièces d'adaptation d'un dispositif de support modulaire

(43) Veröffentlichungstag der Anmeldung: 17.09.2014
(73) Patentinhaber: UNIVER S.p.A., 20128 Milano (IT)
(72) Erfinder: Oerder, Markus, 61479 Glashütten-Schlossborn (DE)
(74) Vertreter: Quermann, Helmut

(56) Entgegenhaltungen:
- EP-A1- 1 108 945
- US-B2- 7 331 104

## Beschreibung

Die Erfindung betrifft eine Verbindung zweier Adapterteile einer modular aufbaubaren Tragvorrichtung zum Tragen von Werkzeugen, Werkstücken oder dergleichen, wobei das jeweilige Adapterteil einen Ansatz aufweist, sowie mit einer Verbindungsschelle, die die einander zugewandt positionierten Ansätze auf einander abgewandten Seiten der Ansätze hintergreift und die Ansätze axial und radial zueinander festlegt, sowie mit einer Einrichtung zum drehfesten Festlegen der Ansätze zueinander.

Tragvorrichtungen dienen insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen. Hierbei finden Stangenteile Verwendung, die mittels Adaptern verbindbar sind, wobei die Stirnflächen der Stangenteile in aller Regel senkrecht zu den Längsachsen dieser Stangenteile angeordnet sind.

Eine Verbindung der eingangs genannten Art ist aus der US 7,331,104 B2 bekannt. Bei dieser erfolgt das drehfeste Festlegen der Ansätze zueinander dadurch, dass die Ansätze auf deren einander zugewandten Seite mit sich axial erstreckenden Vorsprüngen versehen sind, die formschlüssig in die Verbindungsschelle eingreifen. Demnach erfolgt der Kraftfluss bezüglich der drehfesten Verbindung der beiden Adapterteile vom einen Adapterteil in die Verbindungsschelle und von dieser in das andere Adapterteil. Ein solcher Kraftfluss ist konstruktiv und unter Festigkeitsaspekten nachteilig, weil die Verbindungsschelle wegen der Ausbildung der kraftschlüssigen Aufnahme der Verbindungsschelle ein Sonderteil darstellen muss und Kräfte über die Verbindungsschelle übertragen werden müssen.

Aufgabe der vorliegenden Erfindung ist es, eine stabile Verbindung zweier Adapterteile bei weitgehend standardisierter Ausgestaltung der Adapterteile zu schaffen, wobei diese Verbindung eine geringe Anzahl von Einzelteilen aufweisen soll. Die Verbindung soll zudem eine genaue Drehwinkelanordnung der Adapterteile bei exakter Reproduzierbarkeit gewährleisten.

Gelöst wird die Aufgabe bei einer Verbindung der eingangs genannten Art dadurch, dass die Einrichtung zum drehfesten Festlegen der Ansätze zueinander ein Formschlussteil aufweist, das zwischen den beiden Ansätzen angeordnet ist und zur drehfesten Festlegung formschlüssig in beide Ansätze eingreift.

Demzufolge ist es bei der erfindungsgemäßen Verbindung nicht erforderlich, dass die Verbindungsschelle besonders gestaltet ist, um zur drehfesten Verbindung der beiden Adapterteile beizutragen. Die Verbindungsschelle kann als einfaches Standardbauteil ausgebildet sein, da es Aufgabe der Verbindungsschelle ist, die beiden Ansätze bzw. die diesen zugeordneten Adapterteile axial und radial zueinander festzulegen. Das drehfeste Festlegen der Ansätze bzw. Adapterteile zueinander erfolgt durch das Formschlussteil, das unmittelbar drehmomentübertragend zwischen den Ansätzen wirksam ist. Es wird somit ein über das eine Adapterteil bzw. dessen Ansatz in das andere Adapterteil bzw. dessen Ansatz eingeleitetes Drehmoment unmittelbar vom einen Ansatz über das Formschlussteil in den anderen Ansatz eingeleitet.

Aufgrund dieses Wirkprinzips ist es nur erforderlich, die Ansätze der Adapterteile so auszubilden, dass sie formschlüssig mit dem Formschlussteil zusammenwirken können. Es ist somit nur erforderlich, den jeweiligen Ansatz standardmäßig so auszubilden, dass ein Eingriff des Formschlussteils in den Ansatz möglich ist.

Die erfindungsgemäße Verbindung ermöglicht somit eine stabile Verbindung der Adapterteile mit dem Erfordernis, nur eine geringe Anzahl von Sonderteilen und überdies eine geringe Anzahl von Einzelkomponenten vorhalten zu müssen. Die Verbindung ist geometrisch genau darstellbar und exakt reproduzierbar. Letztgenanntes ist insbesondere im Fall eines Crashs, somit einer Beschädigung der Tragvorrichtung erforderlich.

Die Anordnung der Verbindungsschelle kann beliebig an den Adapterteilen bzw. deren Ansätzen erfolgen, somit in jeder beliebigen Drehwinkellage. Dies ist von besonderem Vorteil beim Aufbau der Tragvorrichtung, weil oftmals Bereiche der Tragvorrichtung schlecht zugänglich sind. In diesem Fall kann die Verbindungsschelle in jeder beliebigen Winkellage geschlossen werden. Diese Möglichkeit, die Verbindungsschelle in beliebiger Winkellage anordnen zu können, ergibt sich aufgrund der Tatsache, dass der Verbindungsschelle nicht die Funktion der Drehmomentübertragung zwischen den Adapterteilen zukommt, sondern nur die Funktion der axialen und radialen Festlegung der Ansätze bzw. der Adapterteile zueinander.

Gemäß einer besonderen Ausführungsform der Erfindung ist vorgesehen, dass das Formschlussteil als Scheibe ausgebildet ist. Diese Gestaltung des Formschlussteils erlaubt es, dieses recht platzsparend und optimal drehmomentübertragend zwischen den beiden Ansätzen der Adapterteile anzuordnen. Bei einfachster Gestaltung ist zwischen den beiden Ansätzen ein Hohlraum gebildet, der der Aufnahme der Scheibe dient.

Insbesondere ist die Scheibe radial außen mit Vorsprüngen versehen, wobei die Scheibe mit deren Vorsprüngen in radial innen an den Ansätzen befindliche Ausnehmungen eingreift. Dies ist einerseits von Vorteil unter dem Aspekt, dass die Scheibe besonders flach ausgebildet werden kann. Andererseits werden Drehmomente zwischen einem Ansatz und der Scheibe sowie der Scheibe und dem anderen Ansatz in relativ großem Abstand von der zentralen Achse der Scheibe übertragen.

Das Formschlussteil, insbesondere die Scheibe, besteht vorzugsweise aus Metall oder Kunststoff. Bei dem Metall handelt es sich insbesondere um Aluminium oder Stahl.

Es ist völlig ausreichend, wenn die Scheibe als Ringscheibe ausgebildet ist.

Es wird als besonders vorteilhaft angesehen, wenn die Scheibe über den radial äußeren Umfang gleichmäßig verteilt die Vorsprünge aufweist. Obwohl es grundsätzlich ausreicht, wenn der Vorsprung einen mit dem jeweiligen Ansatz zusammenwirkenden Vorsprung aufweist, wird es unter dem Aspekt der gleichmäßigen Einleitung der Drehmomente in die Scheibe als vorteilhaft angesehen, wenn die Scheibe mittels mehrerer Vorsprünge in den zugeordneten Ansatz eingreift. Eine besonders gleichmäßige Krafteinleitung vom Ansatz in die Scheibe bzw. von der Scheibe in den Ansatz ergibt sich, wenn die Vorsprünge gleichmäßig verteilt über den äußeren Umfang der Scheibe angeordnet sind.

Eine besonders einfache Gestaltung der Scheibe und deren Vorsprünge ergibt sich, wenn der jeweilige Vorsprung zahnförmig ausgebildet ist.

Entsprechend wird es bezüglich des jeweiligen Ansatzes als besonders vorteilhaft angesehen, wenn dieser über den radial inneren Umfang gleichmäßig verteilt die Ausnehmungen aufweist. Die jeweilige Ausnehmung ist vorzugsweise so gestaltet, dass sie einen Vorsprung mit geringem Spiel in Tangentialrichtung aufnimmt. Dies gewährleistet, dass die beiden Adapterteile spielfrei bzw. weitgehend spielfrei zueinander festgelegt sind. Vorzugsweise entspricht die Anzahl der Ausnehmungen des jeweiligen Ansatzes der mit diesem Ansatz in Wirkverbindung bringbaren Vorsprünge der Scheibe oder es ist diese Anzahl doppelt oder dreimal so groß. Entspricht die Anzahl der Ausnehmungen des jeweiligen Ansatzes der Anzahl der mit diesem Ansatz in Wirkverbindung bringbaren Vorsprünge der Scheibe greift bei miteinander verbundenen Adapterteilen in jede Ausnehmung ein Vorsprung ein. Sind beispielsweise zwölf Ausnehmungen im Ansatz und zwölf, diesem Ansatz zugeordnete Vorsprünge bei der Scheibe vorgesehen, können die Adapterteile in einer 12er-Teilung, somit in einer Teilung von jeweils 30° zueinander positioniert werden. Sind beispielsweise 24 Ausnehmungen im Ansatz vorgesehen und 12 Zähne, bedeutet dies, dass aufgrund der 24er-Teilung die Adapterteile zueinander in einem wählbaren Winkel mit einer Stufung von 15° zueinander positioniert werden können. Bei dreifacher Anzahl der Ausnehmungen, somit 36 Ausnehmungen und 12 Vorsprüngen, wäre dann die Stufung 10°.

Es wird als besonders vorteilhaft angesehen, wenn der jeweilige Vorsprung in Ausnehmungen beider Ansätze eingreift. Ein Drehmoment wird somit vom einen Ansatz unmittelbar über den jeweiligen Vorsprung in den anderen Ansatz übertragen.

Unter dem Aspekt einer geringen Anzahl von Einzelkomponenten wird es als besonders vorteilhaft angesehen, wenn die Ansätze identisch ausgebildet sind. Vorzugsweise sind die Adapterteile identisch.

Es wird als baulich besonders vorteilhaft angesehen, wenn der jeweilige Ansatz eine dem anderen Ansatz zugewandte ebene, radial angeordnete Stirnfläche, ferner eine radial äußere, kreisförmige Kontur, sowie eine auf der der Stirnfläche abgewandten Seite befindliche kreisringförmige Klemmfläche aufweist, wobei die Klemmfläche bezüglich einer radialen Ebene geneigt angeordnet ist und mit einer entsprechend geneigt angeordneten Klemmfläche der Verbindungsschelle zusammenwirkt. Diese Gestaltung ermöglicht ein einfaches Anlegen der Schelle und sicheres Klemmen der beiden Ansätze gegeneinander, bei gleichzeitiger radialer Festlegung der Ansätze bzw. Adapterteile zueinander. Über die bezüglich der radialen Ebene geneigt angeordneten Klemmflächen kann besonders günstig eine Spannkraft mittels der Verbindungsschelle auf die beiden Ansätze aufgebracht werden.

Die Verbindungsschelle ist vorzugsweise derart gestaltet, dass sie zwei Schenkel aufweist. Die beiden Schenkel sind gelenkig miteinander verbunden. Im Bereich der dem Gelenk abgewandten Enden der Schenkel weist die Verbindungsschelle Mittel zum Verbinden der beiden Schenkel bei in Schließstellung befindlichen Schenkeln auf. Diese Mittel weisen insbesondere eine in dem einen Schenkel schwenkbar gelagerte Schraube und einen in dem anderen Schenkel gelagerten Ansatz auf. Bei aufeinander zu bewegten, dem Gelenk abgewandten Enden der Schenkel wird die Schraube mit dem Schraubenkopf hinter den Ansatz geschwenkt und dann die Schraube eingeschraubt, womit die Verbindungsschelle die Ansätze der beiden Adapterteile klemmend umschließt.

Die Adapterteile der modular aufbaubaren Tragvorrichtung können unterschiedlich gestaltet sein. Es wird als vorteilhaft angesehen, wenn mindestens eines der Adapterteile, insbesondere beide Adapterteile, einen Hohlprofilabschnitt zur verschieblichen, axial festlegbaren und insbesondere drehfest festlegbaren Aufnahme eines Stangenteils der Tragvorrichtung aufweist. An diesem Stangenteil können dann beispielsweise mittels weiterer Adapterteile Werkzeuge, Werkstücke oder dergleichen befestigt werden.

Weitere Merkmale der Erfindung sind in den Unteransprüchen, der Beschreibung der Figuren sowie den Figuren selbst dargestellt, wobei bemerkt wird, dass alle Einzelmerkmale und alle Kombinationen von Einzelmerkmale erfindungswesentlich sind.

In den Figuren ist die Erfindung anhand zweier Ausführungsbeispiele dargestellt, ohne hierauf beschränkt zu sein. Es zeigt:
- Fig. 1: in einer räumlichen Ansicht ein erstes Ausführungsbeispiel, veranschaulicht in einer Explosionsdarstellung, somit vor dem Herstellen der Verbindung der beiden Adapterteile,
- Fig. 2: die hergestellte Verbindung der beiden Adapterteile, gemäß dem Ausführungsbeispiel nach Fig. 1, in einer Schnittdarstellung,
- Fig. 3: in einer räumlichen Ansicht ein zweites Ausführungsbeispiel, veranschaulicht vor dem Herstellen der Verbindung der beiden Adapterteile.

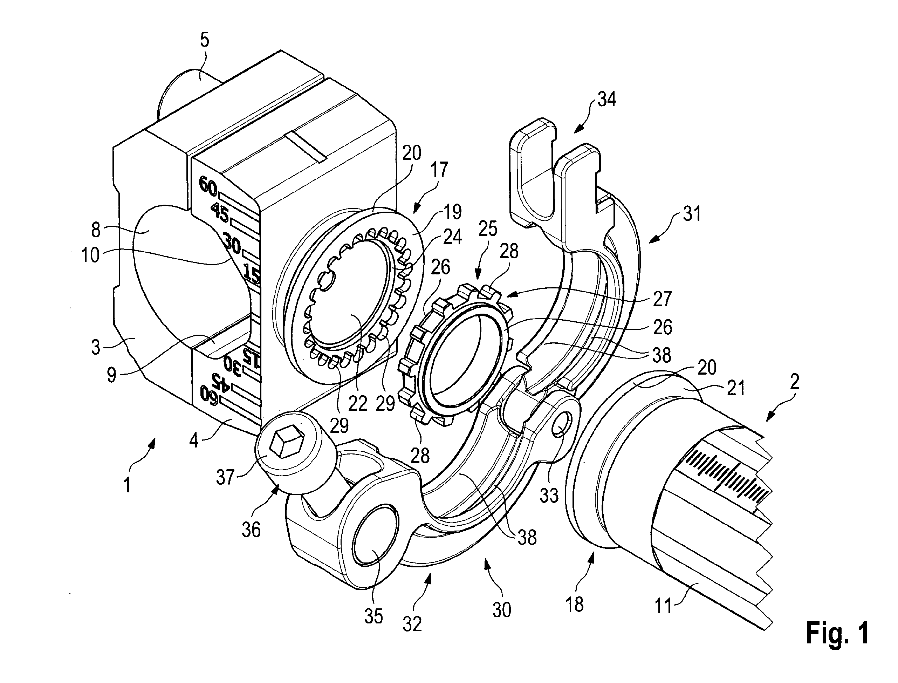

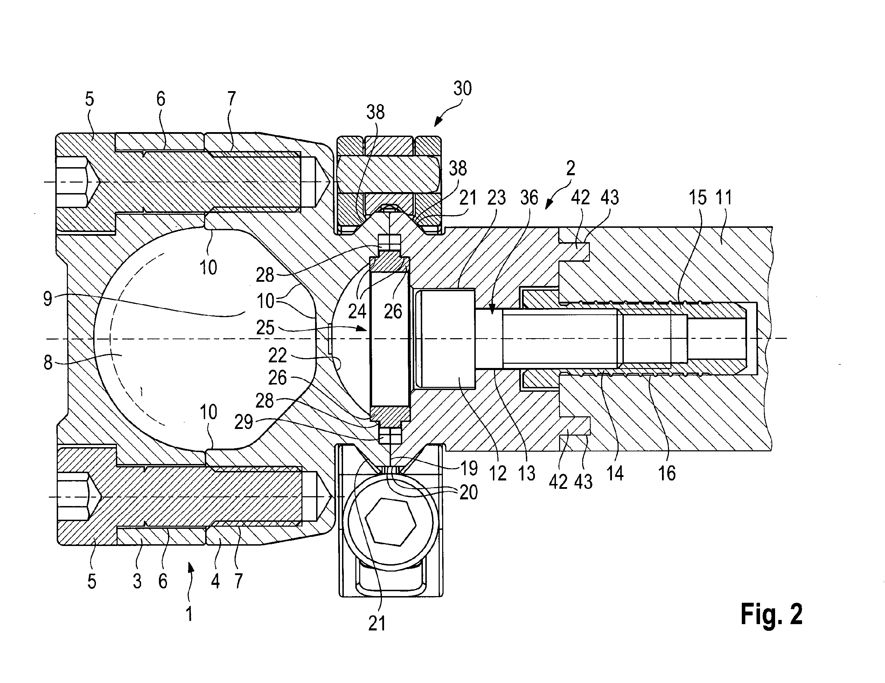

Die Fig. 1 und 2, betreffend das erste Ausführungsbeispiel, zeigen eine modular aufbaubare Tragvorrichtung im Bereich von zwei zu verbindenden Adapterteilen 1 und 2. Hierbei weist das Adapterteil 1 zwei Halbschalen 3 und 4 auf, die mittels zweier Schrauben 5 verbindbar sind. Die jeweilige Schraube ist durch eine Bohrung 6 der Halbschale 3 gesteckt und in eine Gewindebohrung 7 der Halbschale 4 eingeschraubt. Bei der jeweiligen Schraube 5 handelt es sich um eine Innensechskantschraube.

Die Halbschale 3 weist auf ihrer der Halbschale 4 zugewandten Seite eine im Querschnitt halbkreisförmige Ausnehmung 8 auf. Die Halbschale 4 weist auf ihrer der Halbschale 3 zugewandten Seite eine Ausnehmung 9 auf, die auf ihrer der Ausnehmung 8 abgewandten Seite durch abgewinkelte Wandungsabschnitte 10 der Halbschale 4 begrenzt ist. Aufgrund dieser Gestaltung der Ausnehmungen 8 und 9 dienen diese der Aufnahme eines Stangenabschnitts der Tragvorrichtung, wobei dieser Stangenabschnitt einen derart von einem kreisförmigen Außenquerschnitt abweichenden Außenquerschnitt aufweist, dass der Stangenabschnitt an den Wandungsabschnitten 10 anliegt und somit zwar von den Ausnehmungen 8 und 9 aufgenommen wird, aber aufgrund der Ausbildung der Wandungsabschnitte 10 drehfest mittels der Halbschalen 3 und 4 gelagert ist. Bei angezogenen Schrauben 5 klemmt die Halbschale 3 den Stangenabschnitt gegen die Halbschale 4.

Das andere Adapterteil 2 ist mit einem solchen Stangenabschnitt 11 verbunden. Die Verbindung erfolgt mittels einer Schraube 12, die eine Bohrung 13 im Adapterteil 2 durchsetzt und in einen Gewindeabschnitt 14 einer Gewindebüchse 15 eingeschraubt ist, die in eine Bohrung 16 des Stangenabschnitts 11 schneidend eingeschraubt ist. Über Formschlusselemente 42, die im Bereich der Trennfläche von Adapterteil 2 und Stangenabschnitt 11 mit dem Adapterteil 2 verbunden sind und in Ausnehmungen 43 des Stangenabschnitts 11 eingreifen, wird eine zusätzliche Drehsicherung von Adapterteil 2 und Stangenabschnitt 11 bewerkstelligt.

Das Adapterteil 1 weist einen Ansatz 17 und das Adapterteil 2 einen Ansatz 18 auf. Der jeweilige Ansatz 17 bzw. 18 weist einen dem anderen Ansatz zugewandte ebene, radial angeordnete Stirnfläche 19, ferner eine radial äußere kreisförmige Kontur 20 sowie eine auf der der Stirnfläche 19 abgewandten Seite befindliche kreisringförmige Klemmfläche 21 auf. Die Klemmfläche 21 ist bezüglich einer radialen Ebene, die mit der Stirnfläche 19 zusammenfällt, geneigt angeordnet. Der jeweilige Ansatz 17 bzw. 18 verjüngt sich nach radial außen. Die Ansätze 17 und 18 sind bezüglich der jeweiligen Stirnfläche 19 symmetrisch ausgebildet, weisen somit insbesondere denselben Außendurchmesser, wie er durch die Kontur 20 vorgegeben ist, auf. Auch ist die Neigung der jeweiligen Klemmfläche 21 bezüglich dieser Kontur 20 bzw. der Stirnfläche 19 identisch. Es ergibt sich somit, wie insbesondere der Darstellung der Fig. 2 zu entnehmen ist, eine spiegelsymmetrische Anordnung der jeweiligen Stirnflächen 19, der jeweiligen Konturen 20 und der jeweiligen Klemmflächen 21.

Der Ansatz 17 weist einen nach innen gewölbten Boden 22 und der Ansatz 18 eine zylindrische Ausnehmung 23 für den Kopf der Schraube 12 auf. Ferner weisen die Ansätze 17 und 18 auf deren zugewandten Seiten identische Rücksprünge auf. Der jeweilige eine Rücksprung 24 verläuft entlang eines Vollkreises und dient der Aufnahme einer Einrichtung zum drehfesten Festlegen der Ansätze 17 und 18 zueinander, wobei diese ein als Scheibe 25 ausgebildetes Formschlussteil ist. Diese Scheibe 25 ist als Ringscheibe aus Aluminium gestaltet, die auf axial abgewandten Seiten jeweils einen ringförmigen Vorsprung 26 aufweist, wobei sich der Ansatz 17 im Bereich dessen Rücksprung 24 am Vorsprung 26 der Scheibe 25 und der Ansatz 18 im Bereich dessen Rücksprung 24 am Vorsprung 26 der Scheibe 25 abstützt. Hierbei ist ein geringer Spalt zwischen den Stirnflächen 19 der Ansätze 17 und 18 gebildet.

In dem Bereich zwischen den beiden Vorsprüngen 26 weist die Scheibe 25 einen Abschnitt 27 mit am radial äußeren Umfang gleichmäßig verteilt angeordneten, zahnförmigen Vorsprüngen 28 auf. Die Scheibe 25 ist somit quasi in Art eines Zahnrades ausgebildet. Es sind beim Ausführungsbeispiel zwölf Zähne vorgesehen, somit bei einer Kreisteilung von 30°.

Der jeweilige Ansatz 17 bzw. 18 ist im Bereich der Stirnfläche 19 mit Ausnehmungen 29 versehen, die nach radial innen offen sind. Konkret sind vierundzwanzig gleichmäßig über einen Vollkreis verteilte Ausnehmungen 29 vorgesehen, somit bei einer Kreisteilung von 15°. Die jeweilige Ausnehmung 29 ist derart gestaltet, dass ein in axialer Richtung der Scheibe 25 in die Ausnehmung 29 eingesetzter Vorsprung 28 der Scheibe 25, mit geringfügigem Spiel in Umfangsrichtung, somit in einer gedachten Drehrichtung der Scheibe 25, mit dem Vorsprung 28 in die Ausnehmung 29 eingreift. Bei zwischen den Ansätzen 17 und 18 positionierter Scheibe 25 greift diese somit mit dem jeweiligen Vorsprung 28 in die zugeordneten beiden Ausnehmungen 29 der Ansätze 17 und 18 ein, womit eine drehfeste Verbindung der beiden Ansätze 17 und 18, somit der Adapterteile 1 und 2 mittels der Scheibe 25 hergestellt ist.

Die Teilung der Scheibe 25 mit deren Vorsprüngen 26 bezüglich der Teilung des jeweiligen Ansatzes 17 bzw. 18 mit deren Ausnehmungen 29 ermöglicht es, in 15°-Schritten die Adapterteile 1 und 2 zueinander verdreht zu positionieren.

Zum axialen und radialen Festlegen der Ansätze 17 und 18 zueinander bzw. der Adapterteile 1 und 2 zueinander ist eine Verbindungsschelle 30 vorgesehen. Diese weist zwei Schenkel 31, 32 auf. Die beiden Schenkel 31 und 32 sind mittels eines Gelenkes 33 miteinander verbunden. Der Schenkel 31 weist im Bereich seines dem Gelenk 33 abgewandten Endes einen U-förmigen Lageransatz 34 auf. Der andere Schenkel 32 nimmt im Bereich seines dem Gelenk 33 abgewandten Endes einen parallel zum Gelenk angeordneten Lagerbolzen 35 schwenkbar auf, in den eine nicht veranschaulichte Gewindebohrung eingebracht ist, in die eine Schraube 36, die als Innensechskantschraube ausgebildet ist, eingeschraubt ist. Bei in Schließstellung befindlicher Verbindungsschelle 30, wenn die Schenkel 31 und 32 aufeinander zugeschwenkt sind, wird die Schraube 36 in den U-förmigen Lageransatz 34 eingeschwenkt und es hintergreift der Kopf 37 der Schraube 36 dort den Schenkel 31. Durch Einschrauben der Schraube 36 werden die Schenkel 31 und 32 der Verbindungsschelle 30 weiter aufeinander zu bewegt und dienen so dem Verbinden der Ansätze 17 und 18, somit dem Verbinden der Adapterteile 1 und 2.

Es wird somit zum Herstellen der Verbindung der beiden Adapterteile 1 und 2 bei demontierten Adapterteilen 1 und 2 zunächst die Scheibe 25 beispielsweise in die Ausnehmungen 29 des Ansatzes 17 eingesteckt und dann werden die Ansätze 17 und 18 aufeinander zu bewegt, sodass die Scheibe 25 auch in die Ausnehmungen 29 des Ansatzes 18 eingreift. Hierbei ist darauf zu achten, dass die Adapterteile 1 und 2 die richtige Drehwinkellage zueinander einnehmen. Bei Erreichen dieses Zwischenmontageschritts liegen die Ansätze 17 und 18 im Bereich der Vorsprünge 26 an der Scheibe 25 an und es befinden sich die Ansätze 17 und 18 im Bereich deren Stirnflächen 19 in geringem Abstand zueinander. Anschließend wird die geöffnete Verbindungsschelle 30 im Bereich der Ansätze 17 und 18 an diese gelegt und die Schenkel 31 und 32 aufeinander zugeschwenkt, wobei Kontaktflächen 38 von Schenkel 31 und Schenkel 32, die entsprechend den Klemmflächen 21 der Ansätze 17 und 18 geneigt sind, an diesen Klemmflächen 21 anliegen. Bei geschlossener Verbindungsschelle 30 und Spannen der Schraube 36, schließt sich die Verbindungsstelle 30 zunehmend, womit sich der Wirkdurchmesser der Verbindungsschelle 30 geringfügig reduziert und demzufolge über die Kontaktflächen 38 auf die Klemmflächen 21 ein Druck ausgeübt wird, mit der Folge, dass die Ansätze 17 und 18 axial gegeneinander verspannt und zudem radial fixiert werden.

Es ist somit über die Verbindungsschelle 30 eine axiale und radiale Verbindung der Adapterteile 1 und 2 bewerkstelligt; die drehfeste Verbindung wird durch das Zusammenwirken der Ansätze 17 und 18 mit der Scheibe 24 bewirkt.

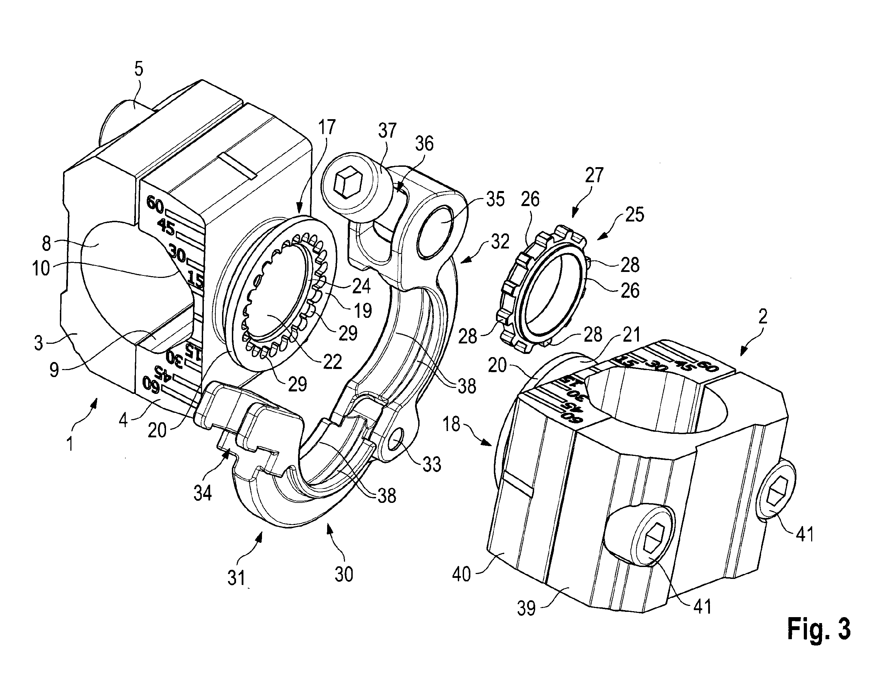

Das Ausführungsbeispiel nach der Fig. 3 unterscheidet sich von demjenigen nach den Fig. 1 und 2 nur dadurch, dass bei dem Adapterteil 2 der Ansatz 18 nicht mit einem Stangenabschnitt 11 verbunden ist, sondern dieses Adapterteil 2 entsprechend dem Adapterteil 1 gebildet ist. Es weist somit entsprechend den Halbschalen 3 und 4 Halbschalen 39 und 40 auf, die mittels zweier den Schrauben 5 entsprechend den Schrauben 41 verbindbar sind. Die Halbschale 40 bildet ein Bauteil mit dem Ansatz 18 gemäß dem Ausführungsbeispiel nach den Fig. 1 und 2.

Bei dem Ausführungsbeispiel nach der Fig. 3 dient somit das Adapterteil 2, genauso wie das Adapterteil 1, der Aufnahme eines Stangenabschnitts 11.

### Bezugszeichenliste

- 1: Adapterteil
- 2: Adapterteil
- 3: Halbschale
- 4: Halbschale
- 5: Schraube
- 6: Rohr
- 7: Gewindebohrung
- 8: Ausnehmung
- 9: Ausnehmung
- 10: Wandungsabschnitt
- 11: Stangenabschnitt
- 12: Schraube
- 13: Bohrung
- 14: Gewindeabschnitt
- 15: Gewindebüchsen
- 16: Bohrung
- 17: Ansatz
- 18: Ansatz
- 19: Stirnfläche
- 20: Kontur
- 21: Klemmfläche
- 22: Boden
- 23: Ausnehmung
- 24: Rücksprung
- 25: Scheibe
- 26: Vorsprung
- 27: Abschnitt
- 28: Vorsprung
- 29: Ausnehmung
- 30: Verbindungsschelle
- 31: Schenkel
- 32: Schenkel
- 33: Gelenk
- 34: Lageransatz
- 35: Lagerbolzen
- 36: Schraube
- 37: Kopf
- 38: Kontaktfläche
- 39: Halbschale
- 40: Halbschale
- 41: Schraube
- 42: Formschlussvorsprung
- 43: Ausnehmung

## Patentansprüche

1. Verbindung zweier Adapterteile (1, 2) einer modular aufbaubaren Tragvorrichtung zum Tragen von Werkzeugen, Werkstücken oder dergleichen, wobei das jeweilige Adapterteil (1 bzw. 2) einen Ansatz (17 bzw. 18) aufweist, sowie mit einer Verbindungsschelle (30), die die aufeinander zugewandt positionierten Ansätze (17, 18) auf einander abgewandten Seiten der Ansätze (17, 18) hintergreift und die Ansätze (17, 18) axial und radial zueinander festlegt, sowie mit einer Einrichtung (25) zum drehfesten Festlegen der Ansätze (17, 18) zueinander, **dadurch gekennzeichnet, dass** die Einrichtung (25) zum drehfesten Festlegen der Ansätze (17, 18) zueinander ein Formschlussteil (25) aufweist, das zwischen den beiden Ansätzen (17, 18) angeordnet ist und zur drehfesten Festlegung formschlüssig in die beiden Ansätze (17, 18) eingreift.

2. Verbindung nach Anspruch 1, **dadurch gekennzeichnet, dass** das Formschlussteil (25) als Scheibe (25), insbesondere als Ringscheibe, ausgebildet ist.

3. Verbindung nach Anspruch 2, **dadurch gekennzeichnet, dass** die Scheibe (25) radial außen mit Vorsprüngen (28) versehen ist, wobei die Scheibe (25) mit diesen Vorsprüngen (28) in radial innen an den Ansätzen (17, 18) befindliche Ausnehmungen (29) eingreift.

4. Verbindung nach Anspruch 3, **dadurch gekennzeichnet, dass** die Scheibe (25) über den radial äußeren Umfang gleichmäßig verteilt die Vorsprünge (28) aufweist.

5. Verbindung nach Anspruch 3 oder 4, **dadurch gekennzeichnet, dass** der jeweilige Vorsprung (28) zahnförmig ausgebildet ist.

6. Verbindung nach einem der Ansprüche 3 bis 5, **dadurch gekennzeichnet, dass** der jeweilige Ansatz (17 bzw. 18) über den radial inneren Umfang gleichmäßig verteilt die Ausnehmungen (29) aufweist.

7. Verbindung nach einem der Ansprüche 3 bis 6, **dadurch gekennzeichnet, dass** die jeweilige Ausnehmung (29) derart gestaltet ist, dass sie einen Vorsprung (28) mit geringem Spiel in Tangentialrichtung aufnimmt.

8. Verbindung nach einem der Ansprüche 3 bis 7, **dadurch gekennzeichnet, dass** die Anzahl der Ausnehmungen (29) des jeweiligen Ansatzes (17 bzw. 18) der Anzahl der mit diesem Ansatz (17 bzw. 18) in Wirkverbindung bringbaren Vorsprünge (28) der Scheibe (25) entspricht oder doppelt so groß ist oder dreimal so groß ist.

9. Verbindung nach einem der Ansprüche 3 bis 8, **dadurch gekennzeichnet, dass** der jeweilige Vorsprung (28) in Ausnehmungen (29) beider Ansätze (17, 18) eingreift.

10. Verbindung nach einem der Ansprüche 1 bis 9, **dadurch gekennzeichnet, dass** das Formschlussteil aus Metall, insbesondere aus Aluminium oder Stahl, oder aus Kunststoff besteht.

11. Verbindung nach einem der Ansprüche 1 bis 10, **dadurch gekennzeichnet, dass** die Ansätze (17, 18) identisch ausgebildet sind.

12. Verbindung nach Anspruch 11, **dadurch gekennzeichnet, dass** der jeweilige Ansatz (17 bzw. 18) eine dem anderen Ansatz (18, 17) zugewandte ebene, radial angeordnete Stirnfläche (19), ferner eine radial äußere kreisförmige Kontur (20) sowie eine auf der der Stirnfläche (19) abgewandten Seite befindliche kreisringförmige Klemmfläche (21) aufweist, wobei die Klemmfläche (21) bezüglich einer radialen Ebene geneigt angeordnet ist und mit einer entsprechend geneigt angeordneten Klemmfläche (38) der Verbindungsschelle (30) zusammenwirkt.

13. Verbindung nach einem der Ansprüche 1 bis 12, **dadurch gekennzeichnet, dass** die Verbindungsschelle (30) zwei Schenkel (31, 32) aufweist, wobei die beiden Schenkel (31, 32) gelenkig miteinander verbunden sind und die Verbindungsschelle (30) im Bereich der dem Gelenk abgewandten Ende der Schenkel (31, 32) Mittel (36) zum Verbinden der beiden Schenkel (31, 32) bei in Schließstellung befindlichen Schenkeln (31, 32) aufweist.

14. Verbindung nach Anspruch 13, **dadurch gekennzeichnet, dass** die Mittel (34, 36) zum Verbinden eine in dem einen Schenkel (32) schwenkbar gelagerte Schraube (36) und einen in dem anderen Schenkel (31) gelagerten Ansatz (34) aufweisen, wobei ein Schraubenkopf bei geschlossener Verbindungsschelle (30) den Ansatz (34) hintergreift.

15. Verbindung nach einem der Ansprüche 2 bis 14, **dadurch gekennzeichnet, dass** sich die beiden Adapterteile (1, 2) bzw. die beiden Ansätze (17, 18) über die Scheibe (25) axial abstützen.

## Claims

1. Connection between two adapter parts (1, 2) of a supporting apparatus which can be constructed in a modular manner for supporting tools, workpieces or the like, wherein the respective adapter part (1 or 2) has an attachment (17 or 18), as well as having a connecting clip (30) which, on sides of the attachments (17, 18) which face away from one another, engages behind the attachments (17, 18) which are positioned facing one another, and fixes the attachments (17, 18) to one another in an axial and radial manner, as well as having a device (25) for fixing the attachments (17, 18) to one another in a non-rotatable manner, **characterized in that** the device (25) for fixing the attachments (17, 18) to one another in a non-rotatable manner has a positive locking part (25) which is arranged between the two attachments (17, 18) and engages in the two attachments (17, 18) in a positive locking manner for the non-rotatable fixing.

2. Connection according to Claim 1, **characterized in that** the positive locking part (25) is realized as a disk (25), in particular as a ring disk.

3. Connection according to Claim 2, **characterized in that** the disk (25) is provided radially on the outside with projections (28), wherein the disk (25) engages by way of said projections (28) in recesses (29) which are situated radially on the inside of the attachments (17, 18).

4. Connection according to Claim 3, **characterized in that** the disk (25) has the projections (28) uniformly distributed over the radially outer circumference.

5. Connection according to Claim 3 or 4, **characterized in that** the respective projection (28) is realized in the shape of a tooth.

6. Connection according to one of Claims 3 to 5, **characterized in that** the respective attachment (17 or 18) has the recesses (29) uniformly distributed over the radially inner circumference.

7. Connection according to one of Claims 3 to 6, **characterized in that** the respective recess (29) is shaped in such a manner that it receives a projection (28) with a small amount of play in the tangential direction.

8. Connection according to one of Claims 3 to 7, **characterized in that** the number of recesses (29) of the respective attachment (17 or 18) corresponds to the number of the projections (28) of the disk (25) which can be moved into operative connection with said attachment (17 or 18) or is twice as large or is three times as large.

9. Connection according to one of Claims 3 to 8, **characterized in that** the respective projection (28) engages in recesses (29) of both attachments (17, 18).

10. Connection according to one of Claims 1 to 9, **characterized in that** the positive locking part consists of metal, in particular of aluminum or steel, or of plastics material.

11. Connection according to one of Claims 1 to 10, **characterized in that** the attachments (17, 18) are realized in an identical manner.

12. Connection according to Claim 11, **characterized in that** the respective attachment (17 or 18) has a flat, radially arranged end face (19) which faces the other attachment (18, 17), additionally a radially outer circular contour (20) as well as a circular ring-shaped clamping face (21) which is situated on the side remote from the end face (19), wherein the clamping face (21) is arranged in an inclined manner with reference to a radial plane and interacts with a clamping face (38) of the connecting clip (30) which is arranged in a correspondingly inclined manner.

13. Connection according to one of Claims 1 to 12, **characterized in that** the connecting clip (30) has two legs (31, 32), wherein the two legs (31, 32) are connected to one another in a flexible manner and the connecting clip (30), in the region of the end of the legs (31, 32) remote from the pivot joint, has means (36) for connecting the two legs (31, 32) when the legs (31, 32) are in the closed position.

14. Connection according to Claim 13, **characterized in that** the means (34, 36) for connecting have a screw (36) which is pivotably mounted in the one leg (32) and an attachment (34) which is mounted in the other leg (31), wherein a screw head engages behind the attachment (34) when the connecting clip (30) is closed.

15. Connection according to one of Claims 2 to 14, **characterized in that** the two adapter parts (1, 2) or the two attachments (17, 18) are supported axially by means of the disk (25).

## Revendications

1. Liaison de deux pièces d'adaptateur (1, 2) d'un dispositif de support de construction modulaire pour supporter des outils, des pièces à usiner ou similaires, la pièce d'adaptateur respective (1, respectivement 2) présentant un embout (17, respectivement 18), et comprenant un collier de liaison (30) qui vient en prise par l'arrière avec les embouts (17, 18) positionnés de manière tournée l'un vers l'autre sur des côtés opposés l'un à l'autre des embouts (17, 18) et fixe axialement et radialement l'un par rapport à l'autre les embouts (17, 18), et comprenant un dispositif (25) pour la fixation solidaire en rotation des embouts (17, 18) l'un à l'autre, **caractérisée en ce que** le dispositif (25) pour la fixation solidaire en rotation des embouts (17, 18) l'un à l'autre présente une partie d'engagement par correspondance de formes (25) qui est disposée entre les deux embouts (17, 18) et qui vient en prise pour la fixation solidaire en rotation par engagement par correspondance de formes dans les deux embouts (17, 18).

2. Liaison selon la revendication 1, **caractérisée en ce que** la partie d'engagement par correspondance de formes (25) est réalisée sous forme de disque (25), en particulier sous forme de disque annulaire.

3. Liaison selon la revendication 2, **caractérisée en ce que** le disque (25) est pourvu radialement à l'extérieur de saillies (28), le disque (25) venant en prise avec ces saillies (28) dans des évidements (29) situés radialement à l'intérieur sur les embouts (17, 18) .

4. Liaison selon la revendication 3, **caractérisée en ce que** le disque (25) présente les saillies (28) réparties uniformément sur la périphérie radialement extérieure.

5. Liaison selon la revendication 3 ou 4, **caractérisée en ce que** la saillie respective (28) est réalisée en forme de dent.

6. Liaison selon l'une quelconque des revendications 3 à 5, **caractérisée en ce que** l'embout respectif (17, respectivement 18) présente les évidements (29) répartis uniformément sur la périphérie radialement intérieure.

7. Liaison selon l'une quelconque des revendications 3 à 6, **caractérisée en ce que** l'évidement respectif (29) est configuré de telle sorte qu'il reçoive une saillie (28) avec un faible jeu dans la direction tangentielle.

8. Liaison selon l'une quelconque des revendications 3 à 7, **caractérisée en ce que** le nombre des évidements (29) de l'embout respectif (17, respectivement 18) correspond au nombre des saillies (28) du disque (25) pouvant être amenées en liaison fonctionnelle avec cet embout (17, respectivement 18) ou est deux fois plus grand ou trois fois plus grand.

9. Liaison selon l'une quelconque des revendications 3 à 8, **caractérisée en ce que** la saillie respective (28) vient en prise dans des évidements (29) des deux embouts (17, 18).

10. Liaison selon l'une quelconque des revendications 1 à 9, **caractérisée en ce que** la partie d'engagement par correspondance de formes se compose de métal, en particulier d'aluminium ou d'acier, ou de plastique.

11. Liaison selon l'une quelconque des revendications 1 à 10, **caractérisée en ce que** les embouts (17, 18) sont réalisés de manière identique.

12. Liaison selon la revendication 11, **caractérisée en ce que** l'embout respectif (17, respectivement 18) présente une surface frontale plane disposée radialement (19) tournée vers l'autre embout (18, 17) et un contour de forme circulaire radialement extérieur (20) ainsi qu'une surface de serrage (21) de forme annulaire circulaire située du côté opposé à la surface frontale (19), la surface de serrage (21) étant disposée de manière inclinée par rapport à un plan radial et coopérant avec une surface de serrage (38) du collier de liaison (30) disposée de manière inclinée de manière correspondante.

13. Liaison selon l'une quelconque des revendications 1 à 12, **caractérisée en ce que** le collier de liaison (30) présente deux branches (31, 32), les deux branches (31, 32) étant connectées de manière articulée l'une à l'autre et le collier de liaison (30) présentant, dans la région de l'extrémité des branches (31, 32) opposée à l'articulation, des moyens (36) de liaison des deux branches (31, 32) lorsque les branches (31, 32) se trouvent dans la position de fermeture.

14. Liaison selon la revendication 13, **caractérisée en ce que** les moyens (34, 36) de liaison présentent une vis (36) supportée de manière pivotante dans l'une des branches (32) et un embout (34) supporté dans l'autre branche (31), une tête de vis venant en prise par l'arrière avec l'embout (34) lorsque le collier de liaison (30) est fermé.

15. Liaison selon l'une quelconque des revendications 2 à 14, **caractérisée en ce que** les deux pièces d'adaptateur (1, 2) ou les deux embouts (17, 18) s'appuient axialement par le biais du disque (25).
